# EUROPEAN PATENT SPECIFICATION

(11) **EP 1 437 623 B1**
(45) Date of publication and mention of the grant of the patent: **30.05.2007**
(21) Application number: 03029859.0
(22) Date of filing: 24.12.2003
(51) Int. Cl.: G03B 42/04, G03C 3/00

(54) **Improved x-ray cassette**
Verbesserte radiographische Kassette
Cassette radiographique améliorée

(30) Priority: 07.01.2003 JP 2003001279
(43) Date of publication of application: 14.07.2004
(73) Proprietor: KONICA MINOLTA HOLDINGS, INC., Tokyo 100-0005 (JP)
(72) Inventor: Ando, Masakazu, Hachioji-shi Tokyo 192-8505 (JP)
(74) Representative: Gille Hrabal Struck Neidlein Prop Roos

(56) References cited:
- EP-A- 0 305 061
- EP-A- 0 900 604
- EP-A- 1 209 517
- US-A- 2 340 378
- US-A- 2 930 305
- US-A- 5 101 423

## Description

### BACKGROUND OF THE INVENTION

### Field of the Invention

The present invention relates to a cassette in which an imaging means such as a stimulable phosphor, a photosensitive film or the like is arranged.

### Description of Related Art

As a screen and film type medical radiography system according to an earlier development, a medical radiography system has been proposed (Published Japanese Patent Application (Tokkaihei) No. H11-288050). In this system, an imaging means such as a stimulable phosphor or the like is used, radiography is performed, and a radiographed image is read out from the stimulable phosphor after the radiography. To perform this radiography, a medical cassette accommodating a radiographic imaging means such as a stimulable phosphor or the like is used (Published Japanese Patent Application (Tokkai) No. 2002-156717 ; see also EP1209517A). As the radiographic imaging means, a stimulable phosphor plate, a flat panel detector and the like are known as well as a silver halide film for radiography.

In the earlier development, to secure the strength of the medical cassette, (1) the medical cassette, in which a front plate is made of carbon-fiber reinforced resin while thickening the edge of the front plate, and (2) the medical cassette, in which a frame made of aluminum is attached to the edge of a front plate made of carbon-fiber reinforced resin or aluminum and a back plate is fabricated according to aluminum die-casting, have been proposed. The medical cassette having the aluminum frame often has a hollow in the center thereof to lighten the medical cassette in weight and to obtain easy workability and easy assembling with other parts. For the purpose of reading out the radiographed image from the cassette, the taking out of the imaging means from the cassette is required. For example, in a certain system, processing such as image reading or the like is performed for the cassette of which a back plate is integrally attached to the imaging means.

In this system, it is required to arrange various mechanisms in the cassette. On the other hand, an image area depending on the size of the cassette is required in the same manner as in the earlier development. Therefore, a through hole or a cut-out opening is added to the frame, or another member is attached to the frame.

Various radiography methods using the cassette are known. For example, the radiography is often performed while the cassette is put under a patient placed on a bed so as to receive the entire weight of the patient. Therefore, the cassette needs a certain strength or more. Further, the radiography is sometimes performed many times for one patient. Therefore, to lighten the cassette in weight is important. To obtain the lightweight cassette having high rigidity, material such as aluminum or carbon has been proposed.

However, because the mechanism of the cassette has been recently complicated, the mechanism is arranged in a very limited space. Therefore, structure elements of the cassette have been gradually reduced, and there is a probability that the cassette is deformed in a certain radiography condition.

### SUMMARY OF THE INVENTION

In order to solve the above problem, an object of the present invention is to provide a cassette, in which the deformation of the cassette based on radiography conditions or the like is prevented while suppressing the increase of the weight of the cassette even though the cassette has a complicated mechanism.

In order to accomplish the above-mentioned object, in accordance with an aspect of the present invention, there is provided a cassette, comprising:
a front assembly;
a back assembly arranged to be opposite to the front assembly,
a radiographic imaging means arranged in a space between the front assembly and the back assembly;
a frame member formed in a frame in outline, arranged in at least one of the front assembly and the back assembly and having a cut-out opening or a through hole for inserting an operable member, such as a lock pin; and
   **characterized in**,
**that** a reinforcement member as a high rigid member is inserted into a concavity of the frame member extending in the longitudinal direction of the frame member and is arranged in an area near to the cut-out opening or the through hole of the frame member, in order to compensate for the lowering of the strength caused by the cut-out opening or the through hole, and
that the reinforcement member further comprises a cut-out opening to be placed at a position corresponding to the cut-out opening or the through hole.

In this cassette according to this invention, even though the cassette has a complicated mechanism, the deformation of the cassette based on radiography conditions or the like can be prevented while suppressing the increase of the weight of the cassette.

Preferably, a lock pin is arranged in at least one of the front assembly and the back assembly to be movable into the cut-out opening or the through hole, and the front assembly and the back assembly can be set to a lock on state or a lock off state by the lock pin.

Preferably, a lock mechanism is arranged to be operable through the cut-out opening or the through hole, and the front assembly and the back assembly can be set to a lock on state or a lock off state by the lock mechanism.

Preferably, the front assembly and the back assembly are detachable from each other in the lock off state of the front assembly and the back assembly.

Preferably, a concavity is arranged in at least one of the front assembly and the back assembly, a light shielding protrusion put into the concavity is arranged in the other one of the front assembly and the back assembly, and the front assembly and the back assembly prevents light from reaching the radiographic imaging means put in the space between the front assembly and the back assembly from outside when the front assembly and the back assembly are combined with each other.

Preferably, a magnetic member attracting the front assembly by magnetic force is arranged in the back assembly.

Preferably, length of the high rigid member is equal to or lower than half of length of one side of the frame member.

Preferably, both the frame member and at least one of a front face plate of the front assembly and a rear surface of the back assembly be a lightweight member having a rigidity lower than the rigidity of the high rigid member.

Preferably, the lightweight member is made of one of aluminum material, carbon-fiber reinforced resin and resin material.

Preferably, the high rigid member is made of steel material.

Preferably, the high rigid member is made of steel material highly strengthened due to heat treatment.

Preferably, the high rigid member is made of engineering plastics or super engineering plastics

Preferably, the radiographic imaging means adheres to the back assembly possible recovering.

Preferably, the radiographic imaging means includes a phosphor.

Preferably, the radiographic imaging means is a stimulable phosphor plate.

### BRIEF DESCRIPTION OF THE DRAWINGS

The present invention will become more fully understood from the detailed description given hereinbelow and the accompanying drawing which are given by way of illustration only, and thus are not intended as a definition of the limits of the present invention, and wherein;
FIG. 1A is a perspective side view showing a front assembly of a cassette set in a separation state according to an embodiment, and FIG. 1B is a perspective side view showing a back assembly of the cassette set in the separation state according to the embodiment;
FIG. 2 is a longitudinal sectional view schematically showing the cassette obtained by combining the front assembly shown in FIG. 1A and the back assembly shown in FIG. 1B;
FIG. 3A is a plan view showing the inner surface of the front assembly to explain a lock mechanism of the cassette shown in FIGS. 1A and 1B, and FIG. 3B is a plan view showing the inner surface of the back assembly to explain the lock mechanism of the cassette shown in FIGS. 1A and 1B;

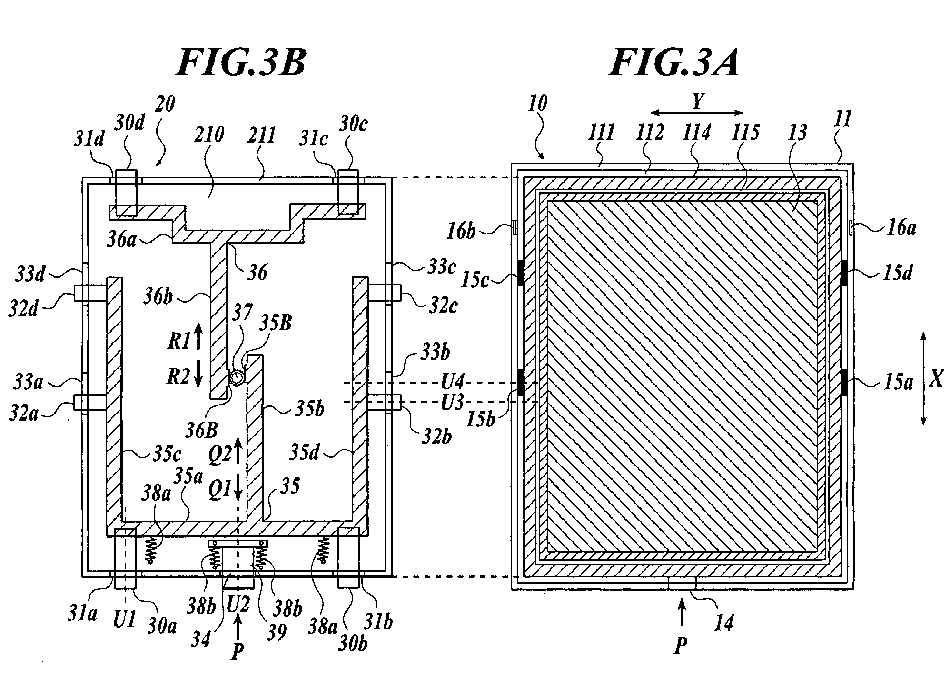

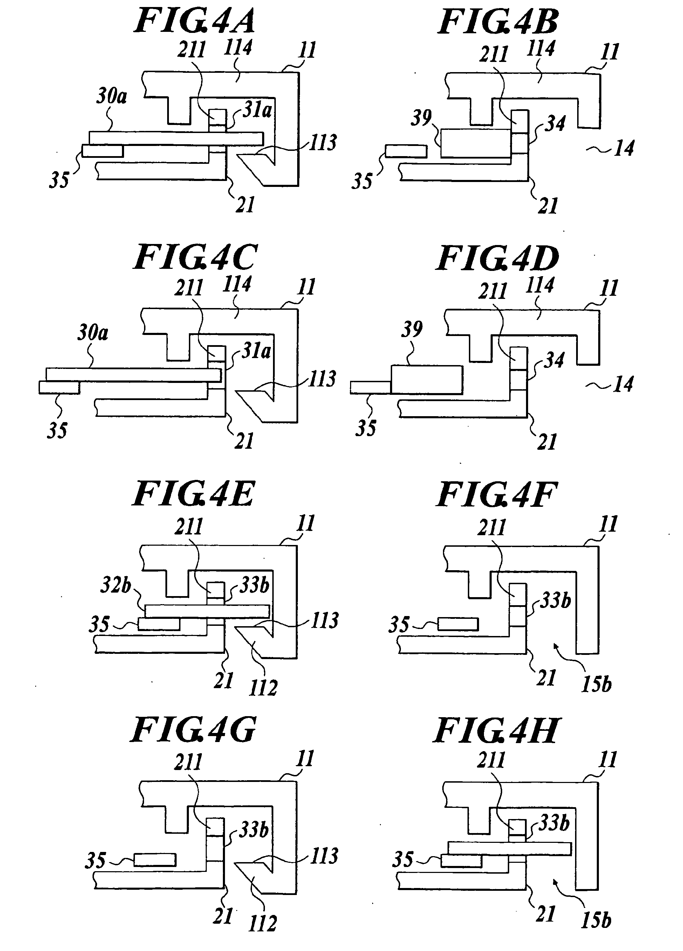

FIGS. 4A to 4H are partial sectional views of the cassette shown in FIGS. 3A and 3B, FIG. 4A is a partial sectional view taken substantially along line U1 in lock on state of the lock mechanism, FIG. 4B is a partial sectional view taken substantially along line U2 in lock on state of the lock mechanism, FIG. 4C is a partial sectional view taken substantially along line U1 in lock off state of the lock mechanism, FIG. 4D is a partial sectional view taken substantially along line U2 in lock off state of the lock mechanism, FIG. 4E is a partial sectional view taken substantially along line U3 in lock on state of the lock mechanism, FIG. 4F is a partial sectional view taken substantially along line U4 in lock on state of the lock mechanism, FIG. 4G is a partial sectional view taken substantially along line U3 in lock off state of the lock mechanism, and FIG. 4H is a partial sectional view taken substantially along line U4 in lock off state of the lock mechanism;
FIG. 5 is an exploded perspective side view showing a reinforcement structure to be attached to a shorter side frame of the front assembly shown in FIG. 1A;
FIG. 6 is a perspective side view showing the state that the reinforcement structure is attached to the frame member shown in FIG. 5; and
FIG. 7 is a perspective side view showing the state that a reinforcement structure is attached to a longer side frame of the front assembly shown in FIG. 1A.

### PREFERRED EMBODIMENTS OF THE INVENTION

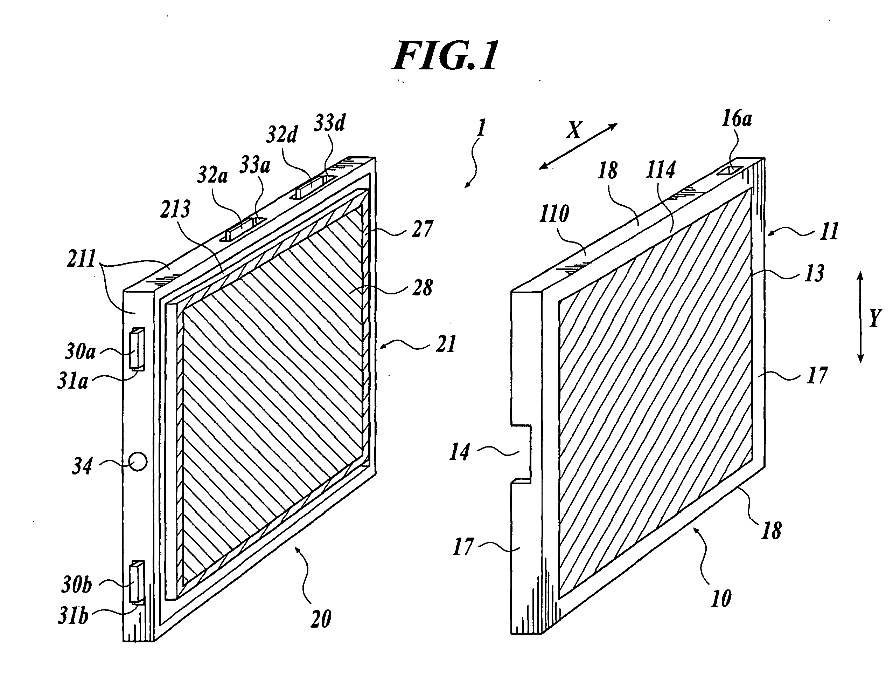

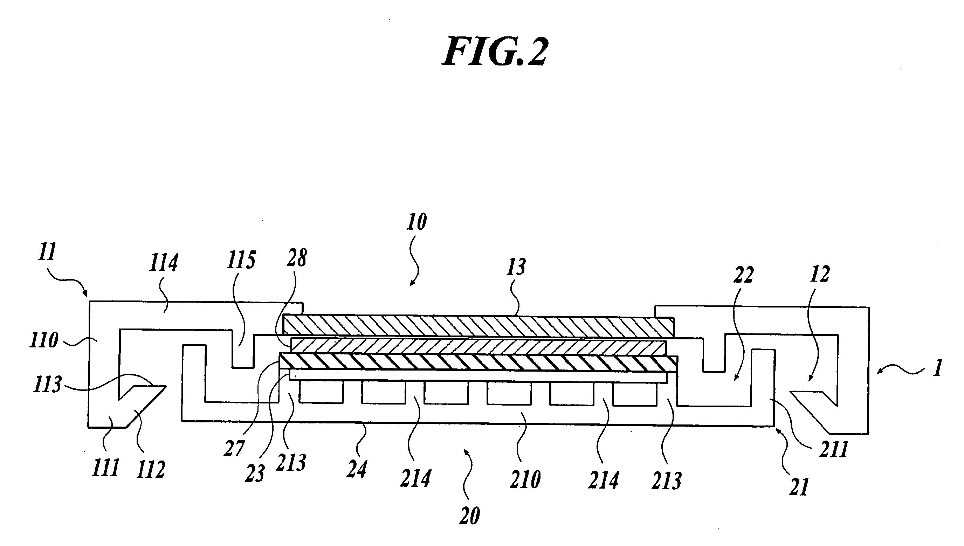

Hereinafter, an embodiment of the present invention will be explained with reference to the drawings. FIG. 1A is a perspective side view showing a front assembly of a medical cassette set in a separation state according to an embodiment, and FIG. 1B is a perspective side view showing a back assembly of the medical cassette set in the separation state according to the embodiment. FIG. 2 is a longitudinal sectional view schematically showing the cassette obtained by combining the front assembly shown in FIG. 1A and the back assembly shown in FIG. 1B. FIG. 3A is a plan view showing the inner surface of the front assembly to explain a lock mechanism of the cassette shown in FIGS. 1A and 1B, and FIG. 3B is a plan view showing the inner surface of the back assembly to explain the lock mechanism of the cassette shown in FIGS. 1A and 1B. FIGS. 4A to 4H are partial sectional views of the cassette showing various states of the lock mechanism shown in FIGS. 3A and 3B.

Hereinafter, as to directions in a medical cassette 1, a direction indicated by a double-headed arrow X and a direction indicated by a double-headed arrow Y in FIGS. 1A and 3A are named an X direction and a Y direction in this specification respectively.

As shown in FIGS. 1A and 1B, a medical cassette (hereinafter, simply called "cassette") 1 comprises a front assembly 10 and a back assembly 20 arranged to be opposite to the front assembly 10. The cassette 1 is formed in a thin rectangular parallelepiped shape, and the assemblies 10 and 20 can be separated from each other. The cassette 1 can hold a stimulable phosphor plate 28 fixed to a supporting plate 27 of the back assembly 20 in the internal space of the cassette 1. The cassette 1 is irradiated with radiations emitted through the side of the front assembly 10 to perform the radiography, and a radiographed image can be accumulated and recorded in the stimulable phosphor plate 28 acting as a radiographic imaging means.

As shown in FIG. 1A, the front assembly 10 comprises a frame member 11 formed in a frame shape in outline and a front face plate 13 inscribed on an inner side surface of the frame member 11. As shown in FIG. 1A and FIGS. 6 and 7 described later, the frame member 11 is divided into two shorter side frames 17 and two longer side frames 18. As shown in FIG. 2, the frame member 11 comprises a frame front face element 114 facing the front side thereof, a frame side face element 110 bending from the outer end of the frame front face element 114 toward the back side at almost right angles, a frame rear face element 111 bending almost perpendicularly from an end of the frame side face element 110 toward the inner side in the Y direction, and an inclined face element 112 bending from an end of the frame rear face element 111 toward the frame front face element 114 at an inclination of a predetermined angle. On the rear surface of the frame front face element 114, a light shielding protrusion 115 protruding in the same direction as that of the frame side face element 110 is arranged.

A space surrounded by the frame front face element 114, the frame side face element 110, the inclined face element 112 and the light shielding protrusion 115 forms a concavity 12 in the inside of the frame member 11.

As shown in FIGS. 3A, 4F and 4H and FIG. 7 described later, four cut-in openings 15a, 15b, 15c and 15d for lock pins are formed in the frame rear face element 111 and the inclined face element 112 of the longer side frames 18. Further, as shown in FIGS. 1A, 3A, 4B and 4D and FIG. 6 described later, a cut-out opening 14 is formed in the almost center of the frame side face element 110 of one shorter side frame 17, and two concavities 16a and 16b for grips are respectively formed at both ends of the frame side face element 110 in the X direction.

The frame member 11 is, for example, obtained by molding strengthened material such as aluminum, hard plastics or the like, and the strengthened material can resist the load given to the front assembly 10. As described later, a reinforcement member is additionally arranged in an area near to the cut-out opening 14. Therefore, it is preferable that the frame member 11 be a lightweight member having a rigidity lower than the rigidity of a high rigid member used as a reinforcement member. The front face plate 13 is, for example, preferably made of material of comparatively low radiation absorptance such as aluminum, carbon fiber reinforced plastics or the like. Further, it is preferable that the front face plate 13 be a lightweight member having a rigidity lower than the rigidity of a high rigid member used as a reinforcement member.

As shown in FIGS. 1B and 2, the back assembly 20 comprises a back assembly body 21, the stimulable phosphor plate 28 and the supporting plate 27 supporting and fixing the stimulable phosphor plate 28. The back assembly body 21 comprises a back assembly rear face element 210 and a back assembly side face element 211 bending from an end of the back assembly rear face element 210 toward the front side of the back assembly 20 at almost right angles. On the front face of the back assembly rear face element 210, an inner wall 213 and a plurality of ribs 214 protruding in the same direction as that of the back assembly side face element 211 are arranged. Further, as shown in FIG. 2, a concavity 22 is formed in the space surrounded by the back assembly rear face element 210, the back assembly side face element 211 and the inner wall 213. It is preferable that the back assembly rear face element 210 be a lightweight member having a rigidity lower than the rigidity a high rigid member used as a reinforcement member.

As shown in FIGS. 1B and 3B, an insertion through hole 34 is formed on one side of the back assembly side face element 211 of the cassette 1 in the X direction so as to correspond to the cut-out opening 14 of the front assembly 10. Four openings 31a, 31b, 31c and 31d are arranged at ends of the back assembly side face element 211 in the Y direction, and four openings 33a, 33b, 33c and 33d are arranged on both sides of the back assembly side face element 211 in the Y direction.

A back base plate 23, for example, made of a lead film coated with a polyethylene terephthalate (PET) film is fixed onto the ribs 214 of the back assembly 20. The supporting plate 27 adheres to the back base plate 23 with an adhesive double coated tape or an adhesive agent at a detachable adhesive strength, and the stimulable phosphor plate 28 is fixed onto the front surface of the supporting plate 27. As described above, the stimulable phosphor plate 28 is held in the back assembly 20.

In the cassette 1, as shown in FIG. 2, when the back assembly 20 and the front assembly 10 are combined with each other, the light shielding protrusion 115 of the front assembly 10 is inserted into the concavity 22 of the back assembly 20, and the back assembly side face element 211 of the back assembly 20 is inserted into the concavity 12 of the front assembly 10. In the above described structure of the front and back assemblies 10 and 20, the cassette 1 is obtained by integrally combining the back assembly 20 and the front assembly 10, and the cassette 1 prevents light from reaching the stimulable phosphor plate 28 from the outside. When velvet or sponge or the like is, for example, arranged in the concavity 12 of the front assembly 10 and/or the concavity 22 of the back assembly 20 to make the back assembly 20 and the front assembly 10 be further tightly in contact with each other, the light shielding in the cassette 1 can be further improved.

Because the back assembly body 21 is structured to attract the front assembly 10 by magnetic force of a magnet in a radiographed image reading apparatus described later and to be held in the apparatus, the back assembly body 21 is preferably made of magnetic plastics or the like to set the back assembly body 21 as a magnetic member capable to attract the magnet by magnetic force. In another case, when the back assembly body 21 is made of normal plastics, a magnetic sheet (not shown) such as an iron film or the like may be arranged as a magnetic member on a rear surface 24 of the back assembly 20, or the rear surface 24 of the back assembly 20 may be coated with magnetic substance to form the back assembly body 21 as a magnetic member.

As described above, the front assembly 10 and the back assembly 20 can be combined and is detachable. However, as shown in FIG. 2, the radiography is normally performed for the front assembly 10 and the back assembly 20 combined with each other.

Next, a lock mechanism of the cassette 1 will be described with reference to FIGS. 3A, 3B and FIGS. 4A to 4H. To keep the combination of the front assembly 10 and the back assembly 20, the cassette 1 is provided with a lock mechanism. As the lock mechanism of the cassette 1, the cut-in openings 15a, 15b, 15c and 15d for lock pins are formed in the front assembly 10. The back assembly 20 further comprises a first connecting member 35, a second connecting member 36 and a pinion 37. The connecting members 35 and 36 have lock pins and act as engaged elements.

As shown in FIG. 3B, the first connecting member 35 comprises a first lateral element 35a, a first middle element 35b protruding from the slightly right of the center of the first lateral element 35a towards the inner side of the back assembly 20 in the X direction, a first left element 35c protruding from the left end of the first lateral element 35a towards the inner side of the back assembly 20 in the X direction, and a first right element 35d protruding from the right end of the first lateral element 35a towards the inner side of the back assembly 20 in the X direction.

The second connecting member 36 comprises a second lateral element 36a and a second middle element 36b protruding from the slightly left of the center of the second lateral element 36a towards the direction opposite to that of the first middle element 35b. The top portion of the first middle element 35b is opposite to the top portion of the second middle element 36b through the pinion 37 placed in the almost center of the back assembly 20, and racks 35B and 36B respectively arranged on the side surfaces of the top portions of the elements 35b and 36b gear with the pinion 37 to connect the first connecting member 35 and the second connecting member 36 with each other through the pinion 37.

The back assembly 20 further comprises lock pins 30a and 30b acting as engaged elements and protruding in the neighborhood of the ends of the first lateral element 35a of the first connecting member 35 in the direction opposite to that of the first left element 35c and the first right element 35d. The back assembly 20 further comprises lock pins 32a and 32d acting as sliding elements and protruding outward from the side surface of the first left element 35c, and lock pins 32b and 32c acting as sliding elements and protruding outward from the side surface of the first right element 35d. The lock pins 32a and 32b are placed at a position far from the top of the back assembly 20 by almost 1/2 of the height of the back assembly 20 in the X direction, and the lock pins 32c and 32d are placed at a position far from the top of the back assembly 20 by almost 1/4 of the height of the back assembly 20 in the X direction.

As shown in FIG. 3B, the back assembly 20 further comprises two coil springs 38a. One end of each coil spring 38a is fixed to the first connecting member 35, and the other end of each coil spring 38a is fixed to the back assembly rear face element 210. The first connecting member 35 always receives a biasing force from the coil springs 38a so as to be moved in a direction indicated by an arrow Q1.

The back assembly 20 further comprises a push latch 39 arranged between the first connecting member 35 and the back assembly side face element 211 having the insertion through hole 34, and two coil springs 38b. One end of each coil spring 38b is fixed to the push latch 39, and the other end of each coil spring 38b is fixed to the back assembly rear face element 210. The push latch 39 always receives a biasing force from the coil springs 38b so as to be moved in the direction of the arrow Q1.

The back assembly 20 further comprises lock pins 30c and 30d acting as engaged elements and protruding in the neighborhood of the ends of the second lateral element 36a of the second connecting member 36 in the direction opposite to that of the second middle element 36b.

As described above, in this embodiment, the lock pins 30a, 30b, 32a, 32b, 32c and 32d arranged on the first connecting member 35 cooperate with one another, and the lock pins 30c and 30d arranged on the second connecting member 36 cooperate with each other. Further, the first connecting member 35 and the second connecting member 36 cooperate with each other due to the operation of the racks 35B and 36B and the pinion 37 arranged on the connecting members 35 and 36. Therefore, all the lock pins 30a, 30b, 30c, 30d, 32a, 32b, 32c and 32d cooperate with one another.

In the cassette 1 according to this embodiment, when the front assembly 10 is combined with the back assembly 20, the cut-out opening 14 of the front assembly 10 is placed at a position corresponding to that of the insertion through hole 34 of the back assembly 20. Each time an inserting member inserted into the cut-out opening 14 and the insertion through hole 34 pushes the push latch 39, states (lock on state and lock off state) of the lock mechanism are alternately selected according to a push latch method. The push latch method is well-known as a mechanism in which a ball of a ball pen is taken in and out of a ball pen case.

Next, a lock on/off operation of the lock mechanism will be described with reference to FIGS. 3A and 3B and FIGS. 4A to 4H.

In case of the lock on state, as shown in FIG. 4A, tops of the lock pins 30a, 30b, 30c and 30d acting as the engaged member protrude from the openings 31a, 31b, 31c and 31d of the back assembly side face element 211 to the outside respectively and project into the space between the frame front face element 114 and an inner facing surface 113 of the inclined face element 112 in the front assembly 10. In this case, as shown in FIG. 4B, the push latch 39 is in contact with the back assembly side face element 211 and is away from the first connecting member 35. As shown in FIGS. 4E and 4F, the lock pins 32a, 32b, 32c and 32d acting as the sliding member reach the space between the frame front face element 114 and the inner facing surface 113 of the inclined face element 112 in the front assembly 10.

In the lock on state described above, when the inserting member is inserted only once into the cassette 1 in the direction of the arrow P through the cut-out opening 14 and the insertion through hole 34 to push the push latch 39, the push latch 39 pushes the first connecting member 35 in the direction of the arrow Q2. And then, the first connecting member 35 is moved by a predetermined distance in the direction of the arrow Q2, and the push latch 39 is stopped. Therefore, the lock mechanism is set to the state shown in FIG. 4D. In this case, as shown in FIG. 4C, the tops of the lock pins 30a and 30b of the first connecting member 35 are placed inside of the back assembly side face element 211. The state shown in FIGS. 4C and 4D indicates the lock off state of the lock mechanism.

Further, the lock pins 32a, 32b, 32c and 32d of the first connecting member 35 are moved with the lock pins 30a and 30b. That is, the lock pins 32a, 32b, 32c and 32d are respectively moved in the openings 33a, 33b, 33c and 33d in the direction of the arrow Q2 by the same distance as that in the lock pins 30a and 30b and are stopped. Therefore, the lock mechanism is set to the state shown in FIGS. 4G and 4H. In this state, because the positions of the lock pins 32a, 32b, 32c and 32d are the same as those of the cut-in openings 15a, 15b, 15c and 15d (openings placed in the frame rear face element 111 and the inclined face element 112), the lock pins 32a, 32b, 32c and 32d can go out from the cut-in openings 15a, 15b, 15c and 15d. That is, the lock mechanism is set to the state in which the back assembly 20 can be separated from the front assembly 10. The state shown in FIGS. 4G and 4H indicates the lock off state of the lock mechanism.

When the first connecting member 35 is moved in the direction of the arrow Q2, the second connecting member 36 is moved in the direction of the arrow R2 due to the motion of the lack 35B of the first connecting member 35, the lack 36B of the second connecting member 36 and the pinion 37 by the same distance as that in the first connecting member 35 and is stopped. Therefore, as shown in FIG. 4C, the tops of the lock pins 30c and 30d of the second connecting member 36 are placed inside of the back assembly side face element 211, and the lock mechanism is set to the lock off state. As described above, the back assembly 20 and the front assembly 10 are set to be detachable from each other. Unless the push latch 39 is pushed, the lock off state is continued and maintained.

In the lock off state shown in FIGS. 4C and 4D, when the inserting member is inserted only once into the cassette 1 in the direction of the arrow P through the cut-out opening 14 and the insertion through hole 34 to push the push latch 39, the push latch 39 is returned in the direction of the arrow Q1. And then, the first connecting member 35 is moved by a predetermined distance in the direction of the arrow Q1 and is stopped. Therefore, the lock mechanism is set to the state shown in FIG. 4B. In this case, as shown in FIG. 4A, the tops of the lock pins 30a and 30b protrude from the openings 31a and 31b toward the outside and project into the space between the frame front face element 114 and the inner facing surface 113 of the inclined face element 112 in the front assembly 10, and the lock mechanism is set to the lock on state. In this case, the lock pins 32a, 32b, 32c and 32d are moved with the lock pins 30a and 30b. That is, the lock pins 32a, 32b, 32c and 32d are respectively moved in the openings 33a, 33b, 33c and 33d in the direction of the arrow Q1 by the same distance as that in the lock pins 30a and 30b and are stopped. Therefore, the lock mechanism is set to the lock on state shown in FIGS. 4E and 4F.

When the first connecting member 35 is moved in the direction of the arrow Q1, the second connecting member 36 is moved in the direction of the arrow R1 due to the motion of the lack 35B of the first connecting member 35, the lack 36B of the second connecting member 36 and the pinion 37 by the same distance as that in the first connecting member 35 and is stopped. Therefore, as shown in FIG. 4A, the tops of the lock pins 30c and 30d protrude from the openings 31c and 31d toward the outside and project into the space between the frame front face element 114 and the inner facing surface 113 of the inclined face element 112 in the front assembly 10, and the lock mechanism is set to the lock on state. As described above, the back assembly 20 engages with and is fixed to the front assembly 10. Therefore, unless the push latch 39 is pushed, the lock on state is continued and maintained.

As described above, in the cassette 1 according to this embodiment, because of a push latch mechanism in which the lock on state and the lock off state are alternately selected each time the push latch 39 is pushed, the state of locking the back assembly 20 to the front assembly 10 and the state of setting the back assembly 20 detachable from the front assembly 10 can be alternately selected easily. Further, image information accumulated and recorded in the stimulable phosphor plate 28 can be read out by setting the lock mechanism of the cassette 1 to the lock off state due to the push latch mechanism, separating the back assembly 20 from the front assembly 10 in the radiographed image reading apparatus and exposing the stimulable phosphor plate 28.

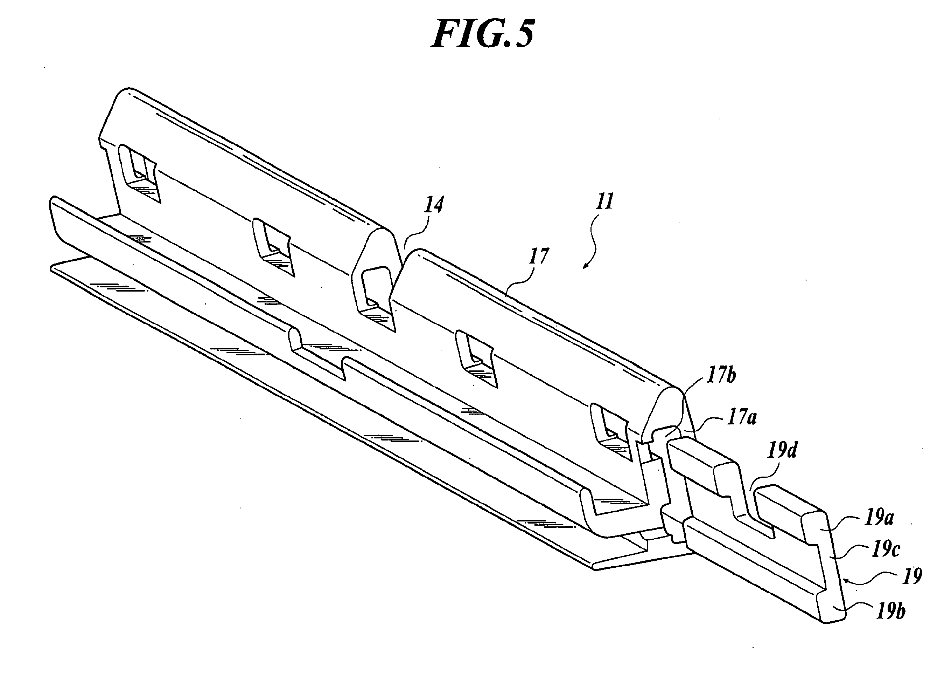

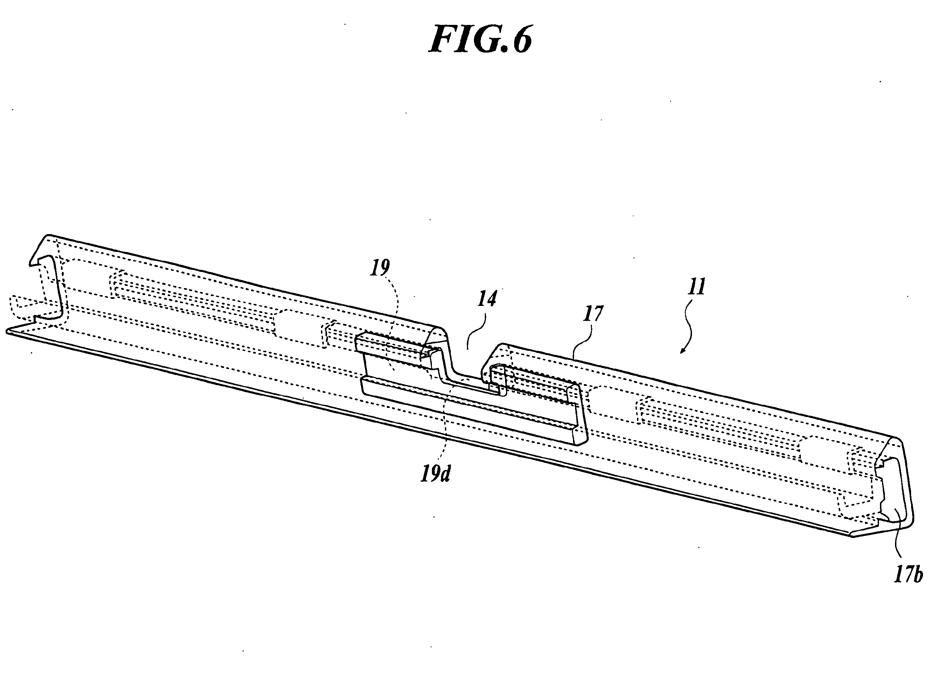

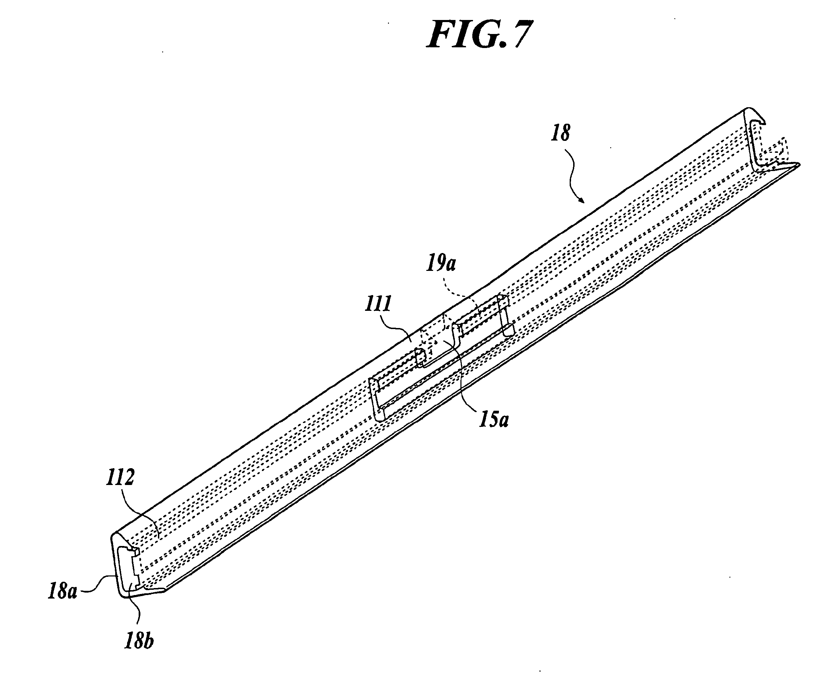

Next, the reinforcement structure arranged in the cut-off opening 14 of the frame member 11 of the front assembly 10 of the cassette 1 shown in FIGS. 1A, 1B, 2, 3A and 3B and FIGS. 4A to 4H will be described with reference to FIGS. 5 to 7. FIG. 5 is an exploded perspective side view showing a reinforcement structure to be attached to one shorter side frame 17 of the front assembly 10 shown in FIG. 1A, FIG. 6 is a perspective side view showing the state that the reinforcement structure is attached to the frame member 11 shown in FIG. 5, and FIG. 7 is a perspective side view showing the state that a reinforcement structure is attached to one longer side frame 18 of the front assembly 10 shown in FIG. 1A.

As shown in FIGS. 1A, 1B and 2, the cassette 1 is structured so as to hold the stimulable phosphor plate 28 into the inner space formed between the front assembly 10 and the back assembly 20. The frame member 11 of the front assembly 10 is, for example, made of aluminum denoting a lightweight material as a strengthened structure member of the entire cassette 1. To obtain the lock mechanism described above, the cut-out opening 14 is formed in one shorter side frame 17 of the frame member 11, the cut-in opening 15a (refer to FIG. 3A) for the lock pin 32a is formed in one longer side frame 18, and following reinforcements are arranged in the neighborhood of the cut-out opening 14 and the cut-in opening 15a respectively.

As shown in FIG. 5, one shorter side frame 17 of the frame member 11 shown in FIG. 1B is formed in an L shape in section and has an outer surface element 17a extending in the longitudinal direction of the frame member 11 so as to form the outer surface of the frame member 11. The cut-out opening 14 having a predetermined length is formed in the almost middle of the outer surface element 17a in its longitudinal direction. Inside of the outer surface element 17a, a concavity 17b extending in the longitudinal direction of the frame member 11 is formed to lighten the frame member 11 in weight. The concavity 17b has a predetermined sectional shape to insert a reinforcement member 19 shown in FIG. 6 into the concavity 17b.

As shown in FIG. 5, the reinforcement member 19 comprises two swelling elements 19a and 19b arranged at top and bottom ends in the drawing, a plate-shaped member 19c placed between the swelling elements 19a and 19b and a cut-out opening 19d extending from swelling element 19a to a portion of the plate-shaped member 19c and having a predetermined length in the almost center of the reinforcement member 19 in its longitudinal direction. The cut-out opening 19d corresponds to the cut-out opening 14 of the shorter side frame 17.

The reinforcement member 19 is made of a high rigid material having high flexural strength and a certain degree of resilience. For example, the reinforcement member 19 is preferably made of SK material (in Japanese Industrial Standards) or the like which is obtained by appropriately performing quench hardening and tempering for carbon steel or the like. In view of cost and required strength, the reinforcement member 19 may be made of carbon steel, stainless steel or the like. Further, the reinforcement member 19 may be made of hard resin material such as engineering plastics, super engineering plastics or the like or super hard resin material. In this case, the reinforcement can be further lightened in weight.

In FIG. 5, the reinforcement member 19 is inserted into the concavity 17b through the end surface of one shorter side frame 17 and is moved into the concavity 17b so as to place the cut-out opening 19d of the reinforcement member 19 at a position corresponding to that of the cut-out opening 14 of the shorter side frame 17. Therefore, the shorter side frame 17 can be structured as a combined member which is obtained by combining the lightweight member and the reinforcement member 19 arranged in a strength lowered area.

As described above, because the reinforcement member 19 placed in the concavity 17b of one shorter side frame 17 is positioned in an area (indicated by the solid line of FIG. 6) of a predetermined length including the cut-out opening 14 of the shorter side-frame 17, the reinforcement member 19 can effectively compensate for the lowering of the strength caused by cutting out the shorter side frame 17 to form the cut-out opening 14. Further, because the reinforcement member 19 having the predetermined length is considerably shorter than the entire length of the shorter side frame 17, the lightening of the entire frame member 11 in weight can be maintained without increasing the weight of the frame member 11 so much. When length of the high rigid member denoting the reinforcement member 19 is set to be lower than half of length of one shorter side member 17 of the frame member 11, the entire frame member 11 can be further preferably lightened in weight.

As shown in FIG. 7, one longer side frame 18 of the frame member 11 is formed in an L shape in section in the same manner as the shorter side frame 17, and the longer side frame 18 has an outer surface element 18a extending in the longitudinal direction of the frame member 11 so as to form the outer surface of the frame member 11. The cut-in opening 15a for the lock pin 32a is formed at a predetermined position of the outer surface element 18a in its longitudinal direction at a predetermined length so as to cut out the inclined face element 112 (refer to FIG. 2) inclined toward the inside of the outer surface element 18a, as shown in FIGS. 4F and 4H.

A reinforcement member 19a made in the same manner as the reinforcement member 19 shown in FIG. 5 is inserted into a concavity 18b of the longer side frame 18. And then, as shown by solid line of FIG. 7, the reinforcement member 19a inserted into the concavity 18b is placed in an area of a predetermined length including the cut-in opening 15a of the longer side frame 18. Therefore, the longer side frame 18 can be structured as a combined member which is obtained by combining the lightweight member and the reinforcement member 19a arranged in a strength lowered area. Accordingly, the reinforcement member 19a can effectively compensate for the lowering of the strength caused by cutting out the longer side frame 18 to form the cut-in opening 15a for the lock pin 32a. Further, because the reinforcement member 19a having the predetermined length is considerably shorter than the entire length of the longer side frame 18, the reduction of the entire frame member 11 in weight can be maintained without increasing the weight of the frame member 11 so much. When length of the high rigid member denoting the reinforcement member 19a is set to be lower than half of length of one longer side member 18 of the frame member 11, the entire frame member 11 can be further preferably lightened in weight.

As shown in FIG. 3A, the cut-in opening 15d for the lock pin 32d is further formed in the longer side frame 18. A reinforcement (not shown in FIG. 7) corresponding to the cut-in opening 15d is arranged in the same manner as the reinforcement member 19a. Further, the other longer side frame 18 of the frame member 11 corresponding to the cut-in openings 15b and 15c is structured in the same manner as the longer side frame 18 corresponding to the cut-in openings 15a and 15d.

As described above, in the cassette 1 shown in FIGS. 5 to 7, the frame member 11 of the front assembly 10 is, for example, made of the lightweight material such as aluminum or the like as the strengthened structure member of the cassette 1, and the reinforcements 19 and 19a are respectively arranged in the neighborhood of both the cut-out opening 14 of one shorter side frame 17 and the cut-in opening 15a of one longer side frame 18 acting as the lock mechanism. Accordingly, the reinforcements 19 and 19a can effectively compensate for the lowering of the strength of the frame member 11. Further, because each of the reinforcements 19 and 19a has only the predetermined length, the entire cassette 1 can be lightened in weight without increasing the weight of the cassette 1 due to the reinforcements 19 and 19a so much.

Therefore, even though the strength of the cassette 1 is lowered to form the cut-out opening 14, the cut-in opening 15a and the like in the frame member 11 acting as a strengthened structure member of the cassette 1 for the purpose of the provision of a complicated mechanism such as the lock mechanism shown in FIGS. 3A and 3B and FIGS. 4A to 4H, each strength lowered area can be effectively reinforced by a combined member including the reinforcement member. Accordingly, even though the cassette 1 receives the entire weight of the patient in certain radiography conditions or the like, the deformation of the cassette 1 can be prevented while suppressing the increase of the weight of the entire cassette 1.

The present invention is described in the embodiment. However, the scope of the present invention is not limited to the embodiment, and various modifications of the embodiment can be performed without departing from the scope of the present invention. For example, the frame member 11 and the like may be made of lightweight material other than aluminum. For example, the frame member 11 may be made of carbon-fiber reinforced resin or resin material. Further, in this embodiment, the frame member 11 of the front assembly 10 acts as a strengthened structure member of the cassette 1. However, a frame member of the back assembly 20 may act as a strengthened structure member of the cassette 1.

Further, when the frame member acting as the strengthened structure member is made of metal such as aluminum or the like, the frame member can be fabricated according to the die casting, the metal injection or the lost wax casting. When the frame member is made of resin material, the frame member can be fabricated according to the injection molding.

## Claims

1. A cassette (1), comprising
a front assembly (10);
a back assembly(20) arranged to be opposite to the front assembly,
a radiographic Imaging means (28) arranged in a space between the front assembly (10) and the back assembly (20);
a frame member (11) formed in a frame in outline, arranged in at least one of the front assembly (10) and the back assembly (20) and having a cut-out opening (14) or a through hole for inserting an operable member, such as a lock pin; and **characterized in,**
**that** a reinforcement member (19) as a high rigid member is inserted into a concavity of the frame member (11) extending in the longitudinal direction of the frame member (11) and is arranged in an area near to the cut-out opening (1 4) or the through hole of the frame member, In order to compensate for the lowering of the strength caused by the cut-out opening (14) or the through hole, and
**that** the reinforcement member (19) further comprises a cut-out opening (19d) to be placed at a position corresponding to the cut-out opening (14) or the through hole.

2. The cassette (1) of claim 1; wherein a lock pin (32a, 32b, 32c, 32d) is arranged in at least one of the front assembly (10) and the back assembly (20) to be movable into the cut-out opening or the through hole, and the front assembly (10) and the back assembly (20) can be set to a lock on state or a lock off state by the lock pin (32a, 32b, 32c, 32d).

3. The cassette of claim 1; wherein a lock mechanism (30a-38b) is arranged to be operable through the cut-out opening (14) or the through hole, and the front assembly (10) and the back assembly (20) can be set to a lock on state or a lock off state by the lock mechanism (30a-38b).

4. The cassette of claim 2 or 3; wherein the front assembly (10) the back assembly (20) are detachable from each other in the lock off state of the front assembly (10) and the back assembly (20).

5. The cassette of claim 4; wherein a concavity (12, 22) Is arranged in at least one of the front assembly (10) and the back assembly (20), a light shielding protrusion (115) put into the concavity (12, 22) is arranged in the other one of the front assembly and the back assembly, and the front assembly (10) and the back assembly (20) cover the radiographic imaging means (28) put in the space between the front assembly (10) and the back assembly (20) so as to prevent light when the front assembly (10) and the back assembly (20) are combined with each other.

6. The cassette of any one of claims 1 to 5; wherein a magnetic member attracting the front assembly (10) by magnetic force is arranged in the back assembly (20).

7. The cassette of any one of claims 1 to 6; wherein length of the high rigid member (19) is equal to or lower than half of the length of one of the longitudinal parts (1 7) of the frame member (11).

8. The cassette of any of claims 1 to 7; wherein both the frame member (11) and at least one of a front face plate of the front assembly (10) and a rear surface (23) of the back assembly(20) be a lightweight member having a rigidity lower than the rigidity of the high rigid member (19), wherein the lightweight member is made of one of aluminum material, carbon-fiber reinforced resin and resin material.

9. The cassette of any one of claims 1 to 8; wherein the high rigid member (19) is made of steel material.

10. The cassette of claim 9; wherein the high rigid member (19) is made of steel material highly strengthened due to heat treatment.

11. The cassette of any one of claims 1 to 10; wherein the high rigid member (19) is made of engineering plastics or super engineering plastics

12. The cassette of any one of claims 1 to 11; wherein the radiographic imaging means (28) adheres to the back assembly (20) at a detachable adhesive strength.

13. The cassette of any one of claims 1 to 1.2; wherein the radiographic imaging means (28) includes a phosphor.

14. The cassette of claim 13; wherein the radiographic imaging means(28) is a stimulable phosphor plate.

## Patentansprüche

1. . Eine Kassette (1), umfassend
eine vordere Baugruppe (10);
eine hintere Baugruppe (20), die gegenüber der vorderen Baugruppe angeordnet ist,
ein radiografisches Bilderzeugungsmittel (28), das in einem Raum zwischen der vorderen Baugruppe (10) und der hinteren Baugruppe (20) angeordnet ist;
ein Rahmenelement (11), das in seinem Umriss in einer Rahmenform gebildet ist, das in mindestens einer der vorderen Baugruppe (10) und der hinteren Baugruppe (20) angeordnet ist und eine ausgeschnittene Öffnung (14) oder Durchgangsloch aufweist, um ein betätigbares Element, wie etwa einen Verriegelungsstift, einzusetzen; und
**dadurch gekennzeichnet,**
**dass** ein Verstärkungselement (19) als ein hohes, steifes Element in eine Höhlung des Rahmenelements (11), die sich in die Längsrichtung des Rahmenelements (11) erstreckt und in einem Gebiet in der Nähe der ausgeschnittenen Öffnung (14) oder des Durchgangslochs des Rahmenelementes angeordnet ist, eingesetzt wird, um die Verminderung der Stärke zu kompensieren, die durch die ausgeschnittene Öffnung (14) oder das Durchgangsloch verursacht wird, und
**dass** das Verstärkungselement (19) des Weiteren eine ausgeschnittene Öffnung (1 9d) aufweist, die an einer Position zu platzieren ist, die der ausgeschnittenen Öffnung (14) oder dem Durchgangsloch entspricht,

2. . Die Kassette (1) nach Anspruch 1 , wobei ein Verriegelungsstift (32a, 32b, 32c, 32d) in mindestens einer der vorderen Baugruppe (10) und der hinteren Baugruppe (20) so angeordnet ist, dass er in die ausgeschnittene Öffnung oder das Durchgangsloch bewegt werden kann, und die vordere Baugruppe (10) und die hintere Baugruppe (20) können durch den Verriegelungsstift (32a, 32b, 32c, 32d) auf einen Verriegelungs-Ein-Zustand oder einen Verriegelungs-Aus-Zustand eingestellt werden.

3. . Die Kassette nach Anspruch 1, wobei ein Verriegelungsmechanismus (30a-38b) so angeordnet ist, dass er durch die ausgeschnittene Öffnung (14) oder das Durchgangsloch betätigt werden kann, und die vordere Baugruppe (10) und die hintere Baugruppe (20) kann durch den Verriegelungsmechanismus (30a-38b) auf einen Verriegelungs-Ein-Zustand oder einen Verriegelungs-Aus-Zustand eingestellt werden.

4. . Die Kassette nach Anspruch 2 oder 3, wobei die vordere Baugruppe (10) und die hintere Baugruppe (20) im Verriegelungs-Aus-Zustand der vorderen Baugruppe (10) und der hinteren Baugruppe (20) voneinander abtrennbar sind,

5. . Die Kassette nach Anspruch 4, wobei in mindestens einer der vorderen Baugruppe (10) und der hinteren Baugruppe (20) eine Höhlung (12, 22) angeordnet ist, ein in der Höhlung (12, 22) platzierter Lichtabschirmvorsprung (115) ist in der anderen der vorderen Baugruppe und der hinteren Baugruppe angeordnet, und die vordere Baugruppe (10) und die hintere Baugruppe (20) decken das radiografische Bilderzeugungsmittel (28) ab, das in dem Raum zwischen der vorderen Baugruppe (10) und der hinteren Baugruppe (20) platziert ist, um so Licht zu verhindern, wenn die vordere Baugruppe (10) und die hintere Baugruppe (20) miteinander kombiniert werden,

6. . Die Kassette nach irgendeinem der Ansprüche 1 bis 5, wobei ein Magnetelement, das die vordere Baugruppe (10) durch Magnetkraft anzieht, in der hinteren Baugruppe (20) angeordnet ist.

7. . Die Kassette nach irgendeinem der Ansprüche 1 bis 6, wobei die Länge des hohen, steifen Elementes (19) gleich oder kleiner ist als die halbe Länge eines der Längsteile (1 7) des Rahmenelements (11),

8. . Die Kassette nach irgendeinem der Ansprüche 1 bis 7, wobei sowohl das Rahmenelement (11) als auch mindestens eines von einer Vorderseitenplatte der vorderen Baugruppe (10) und einer Rückfläche (23) der hinteren Baugruppe (20) ein leichtgewichtiges Element ist, das eine niedrigere Steifigkeit als die Steifigkeit des hohen, steifen Elements (19) aufweist, wobei das leichtgewichtige Element aus einem von Aluminiummaterial, kohlefaserverstärktem Harz und Harzmaterial hergestellt ist,

9. . Die Kassette nach irgendeinem der Ansprüche 1 bis 8, wobei das hohe, steife Element (19) aus Stahlmaterial hergestellt ist.

10. . Die Kassette nach Anspruch 9, wobei das hohe, steife Element (19) aus Stahlmaterial hergestellt ist, das aufgrund von Wärmebehandlung hochverstärkt ist.

11. . Die Kassette nach irgendeinem der Ansprüche 1 bis 10, wobei das hohe, steife Element (19) aus technischen Kunststoffen oder technischen Super-Kunststoffen hergestellt ist.

12. . Die Kassette nach einem der Ansprüche 1 bis 1 1 , wobei das radiografische Bilderzeugungsmittel (28) mit einer lösbaren Haftkraft an der hinteren Baugruppe (20) haftet.

13. . Die Kassette nach irgendeinem der Ansprüche 1 bis 1 2, wobei das radiografische Bilderzeugungsmittel (28) einen Phosphor umfasst,

14. . Die Kassette nach Anspruch 13 wobei das radiografische Bilderzeugungsmittel (28) eine anregbare Phosphorplatte ist,

## Revendications

1. Cassette (1) comprenant
un ensemble avant (10) ;
un ensemble arrière (20) disposé à l'opposé de l'ensemble avant,
un moyen d'image radiographique (28) disposé dans un espace entre l'ensemble avant (10) et l'ensemble arrière (20) ;
un membre de cadre (11) formé dans un cadre de périphérie et disposé dans au moins l'un de l'ensemble avant (10) et de l'ensemble arrière (20) et comprenant une ouverture découpée (14) ou un trou de passage pour insérer un membre opérable tel qu'une cheville de verrouillage ; et **caractérisé en ce**
**qu'**un membre de renforcement (19) comme un membre fortement rigide est inséré dans une concavité du membre de cadre (11) qui s'étend dans la direction longitudinale du membre de cadre (11) et est disposée dans une zone proche de l'ouverture découpée (14) ou du trou de passage du membre de cadre pour compenser la stabilité réduite causée par l'ouverture découpée (14) ou le trou de passage, et
**que** le membre de renforcement (19) comprend de plus une ouverture découpée (19d) qui doit être placée à une position correspondant à l'ouverture découpée (14) ou au trou de passage.

2. Cassette selon la revendication 1, dans laquelle une cheville de verrouillage (32a, 32b, 32c, 32d) est disposée dans au moins l'un de l'ensemble avant (10) et de l'ensemble arrière (20) pour être déplaçable dans l'ouverture découpée ou le trou de passage, et l'ensemble avant (10) et l'ensemble arrière (20) peuvent être mis dans une condition de verrouillage ou une condition de déverrouillage par la cheville de verrouillage (32a, 32b, 32c, 32d).

3. Cassette selon la revendication 1, dans laquelle un mécanisme de verrouillage (30a-38b) est adapté pour être opéré à travers de l'ouverture découpée (14) ou le trou de passage, et l'ensemble avant (10) et l'ensemble arrière (20) peuvent être mis dans une condition de verrouillage ou une condition de déverrouillage par le mécanisme de verrouillage (30a-38b).

4. Cassette selon la revendication 2 ou 3, dans laquelle l'ensemble avant (10) et l'ensemble arrière (20) sont détachable l'un de l'autre dans la condition de déverrouillage de l'ensemble avant (10) et de l'ensemble arrière (20).

5. Cassette selon la revendication 4, dans laquelle une concavité (12, 22) est disposée dans au moins l'un de l'ensemble avant (10) et de l'ensemble arrière (20), une partie en saillie de blindage de lumière (115) insérée dans la concavité (12, 22) est disposée dans l'autre de l'ensemble avant (10) et l'ensemble arrière (20) et l'ensemble avant (10) et l'ensemble arrière (20) couvrent le moyen d'image radiographique (20) disposé dans l'espace entre l'ensemble avant (10) et l'ensemble arrière (20) pour éviter de la lumière quand l'ensemble avant (10) et l'ensemble arrière (20) sont reliés l'un à l'autre.

6. Cassette selon l'une quelconque des revendications 1 à 5, dans laquelle un membre magnétique qui attire l'ensemble avant (10) par force magnétique est disposé dans l'ensemble arrière (20).

7. Cassette selon l'une quelconque des revendications 1 à 6, dans laquelle la longueur du membre fortement rigide (19) est égale à ou plus courte que la moitié de la longueur de l'une des parts longitudinales (17) du membre de cadre (11).

8. Cassette selon l'une quelconque des revendications 1 à 7, dans laquelle et le membre de cadre (11) et au moins l'une d'une plaque de front de l'ensemble avant (10) et d'une surface arrière (23) de l'ensemble arrière (20) est un membre de poids léger comprenant une rigidité qui est plus faible que la rigidité du membre fortement rigide (19), le membre de poids léger étant composé de matière d'aluminium, de résine renforcée par fibres de carbone et de matière de résine.

9. Cassette selon l'une quelconque des revendications 1 à 8, dans laquelle le membre fortement rigide (19) est réalisé en matière d'acier.

10. Cassette selon la revendication 9, dans laquelle le membre fortement rigide (19) est réalisé en matière d'acier fortement renforcé par moyen de traitement thermique.

11. Cassette selon l'une quelconque des revendications 1 à 10, dans laquelle le membre fortement rigide (19) est réalisé en matières plastiques techniques ou matières plastiques super-techniques.

12. Cassette selon l'une quelconque des revendications 1 à 11, dans laquelle le moyen d'image radiographique (28) adhère à l'ensemble arrière (20) avec une force d'adhésion détachable.

13. Cassette selon l'une quelconque des revendications 1 à 12, dans laquelle le moyen d'image radiographique (28) comprend du phosphore.

14. Cassette selon la revendication 13, dans laquelle le moyen d'image radiographique (28) est une plaque en phosphore stimulable.
